# EUROPÄISCHE PATENTSCHRIFT

(11) **EP 2 139 595 B1**
(45) Veröffentlichungstag und Bekanntmachung des Hinweises auf die Patenterteilung: **22.08.2012**
(21) Anmeldenummer: 08716673.2
(22) Anmeldetag: 22.03.2008
(51) Int. Cl.: B01J 8/06, C01B 3/38

(54) **PRIMÄRREFORMER MIT BRENNERZUFÜHRENDEN SEKUNDÄREINLASSKANÄLEN**
PRIMARY REFORMER WITH SECONDARY INLET CHANNELS SUPPLYING THE BURNER
REFORMEUR PRIMAIRE PRÉSENTANT DES CANAUX D'ENTRÉE SECONDAIRES ALIMENTANT LE BRÛLEUR

(30) Priorität: 25.04.2007 DE 102007019830
(43) Veröffentlichungstag der Anmeldung: 06.01.2010
(73) Patentinhaber: ThyssenKrupp Uhde GmbH, 44141 Dortmund (DE)
(72) Erfinder: MEISSNER, Oliver, 45966 Gladbeck (DE); WODBERG, Silke, 58285 Gevelsberg (DE)
(86) Internationale Anmeldenummer: PCT/EP2008/002307
(87) Internationale Veröffentlichungsnummer: WO 2008/131832

(56) Entgegenhaltungen:
- EP-A- 1 329 256
- WO-A-2005/018793
- GB-A- 1 192 688
- US-A1- 2003 148 236
- US-B1- 6 190 158

## Beschreibung

Die Erfindung betrifft einen Reaktor zur katalytischen Reformierung von Kohlenwasserstoffen mit Wasserdampf unter erhöhtem Druck, mit dem Synthesegas hergestellt wird. Derartiges Synthesegas dient beispielsweise zur Herstellung von Ammoniak, Wasserstoff und Methanol.

Reaktoren zur katalytischen Reformierung von Kohlenwasserstoffen mit Wasserdampf sind seit langem bekannt und in einer Vielzahl von Ausführungsformen bekannt. Bei Großanlagen hat sich eine Bauart durchgesetzt, bei der ein deckengefeuerter Kastenofen mit senkrecht stehenden Reaktionsrohren bzw. Spaltrohren zum Einsatz kommt. Hierbei sind die Spaltrohre in Reihen angeordnet. Die Rohre werden mit Prozessgas, welches das Einsatzgas bildet, von oben nach unten durchströmt. Das Einsatzgas wird dabei einem sogenannten Spaltprozess unterzogen.

Die Gasaustrittstemperaturen liegen üblicherweise bei 850 °C und darüber. Das Prozessgas wird im unteren Bereich - inner- oder außerhalb des Ofens - in sogenannten Austrittskollektoren gesammelt. In den zwischen den Rohrreihen liegenden "Gassen" sind senkrecht nach unten feuernde Brenner angeordnet. Dieser Bereich wird als Ofenbox bezeichnet. Das erzeugte Rauchgas durchströmt den Ofen von oben nach unten und wird durch am Boden liegende sogenannte Rauchgastunnel abgezogen. Die Temperaturen in der Ofenbox liegen im Durchschnitt bei 1000 bis 1250 °C. Die Ofenwände sind zur Wärmeisolierung und zum Schutz vor den durch die Beheizung vorherrschenden hohen Temperaturen mit einer feuerfesten Schutzschicht ausgekleidet.

Der durch den Ofen beheizte Reaktionsraum besitzt üblicherweise eine Vielzahl von gasdicht verschlossenen vertikalen Rohren, welche in Reihen angeordnet und zum Füllen mit Katalysator geeignet sind. Diese dienen der Prozessführung und besitzen Einrichtungen zum Zuführen von zu reformierendem Kohlenwasserstoff und bis zu 650°C aufgeheiztem Wasserdampf zum Reaktionsraum sowie Einrichtungen zum Abführen des reformierten Synthesegases aus dem Reaktionsraum.

Der Ofenraum, in dem die Befeuerungsvorrichtungen angeordnet sind, besitzt im unteren Bereich des Raumes eine Kammer zum Sammeln der Rauchgase sowie eine Vielzahl von im wesentlichen waagerecht angeordneten, parallel zueinander und senkrecht zu den vertikalen Rohren verlaufenden Tunneln aus Mauerwerk zum Abzug der Rauchgase. Diese gemauerten Tunnel weisen an den Seiten Öffnungen auf, um einen Abzug der Rauchgase aus dem Ofenraum zu ermöglichen. Die Tunnel werden üblicherweise aus Mauerwerkstoffen erstellt.

WO2005/018793 A1 beschreibt ein typisches Ofensystem und Verfahren zur katalytischen Reformierung von Kohlenwasserstoffen mit Wasserdampf zu Synthesegas unter erhöhtem Druck. Zur besseren Vergleichmäßigung der Rauchgasströmung und für eine gleichmäßigere Temperaturverteilung der Befeuerung wird eine spezielle Ausgestaltung der Außenwände der Tunnel angewendet. WO2006/119812 A1 beschreibt ein typisches Ofensystem und Verfahren zur katalytischen Reformierung von Kohlenwasserstoffen mit Wasserdampf zu Synthesegas mit Zufuhr von Sauerstoff zur Anpassung der Stöchiometrie und einem speziellen nachgeschalteten Porenbrenner zur Vermeidung der Russbildung.

Alle beschriebenen Reformiersysteme haben gemeinsam, dass eine Befeuerungseinrichtung, die aus einer Vielzahl von zwischen den prozessführenden Reaktionsrohren angeordneten Brennern besteht, den Ofenraum mit den durch diesen führenden Reformierrohren beheizt. Die der Befeuerung des Ofenraumes dienenden Brenner werden üblicherweise über getrennte Kanäle mit Heizgas und Luft gespeist. Die Zuführung des Heizgases in den Brennerraum wird dabei getrennt von der Luftzuführung ausgeführt. Der Durchtritt der Gaszuführungen in den Brennerraum erfolgt durch die feuerfeste Ofenauskleidung oder unmittelbar davor. Bei den bisher eingesetzten Konstruktionen wird das Heizgas-Luft-Verhältnis für die Brenner durch eine Drosselklappe oder eine ähnlich geartete Einrichtung zur Einstellung des Gasdurchflusses der Luftzuführung gesteuert. Über diese Einrichtung lässt sich die Brennerbefeuerung und damit die Ofentemperatur kontrollieren. Diese Konstruktion ist zwar effektiv, birgt aber den Nachteil, dass sich die lokale Luftzuführung an den Brennern schlecht steuern lässt und stellenweise zu ungünstigen Verhältnissen Heizgas zu Luft führt.

Das Sauerstoff-Heizgas-Verhältnis kann technisch durch den sogenannten Lambda(λ)-wert beschrieben werden. Bei Einsatz eines stöchiometrischen Molverhältnisses Sauerstoff zu Heizgas erhält man einen Lambda-Wert von 1,0. Bei Verwendung eines im stöchiometrischen Verbrennungsverhältnis geringeren Sauerstoffanteils erhält man einen Lambda-Wert, der niedriger ist als 1,0. Bei Verwendung eines im stöchiometrischen Verbrennungsverhältnis höheren Sauerstoffanteils erhält man einen Lambda-Wert, der höher ist als 1,0. Eine Verbrennung ist daher optimal, wenn der Lambda-Wert 1,0 beträgt. Bei herkömmlichen Konstruktionen erhält man an den einzelnen Brennern Lambda-Werte, die betriebsbedingt schwanken und temporär erhöhte Werte aufweisen können.

Dies wirkt sich nachteilig auf den Verbrennungsprozess aus. Die Folge ist möglicherweise ein insgesamt höherer Verbrauch an Heizgas bezogen auf den Umsatz des Reformierprozesses. Bei einem Wechsel des Brennstoffes lässt sich die Luftzuführung nur schwer auf die veränderte Stöchiometrie einstellen. Dadurch kann es temporär zu einer ungewollten Erhöhung der Flammentemperatur und mit dem erhöhten Zufluss an Luft zu einer verstärkten Bildung von Stickoxiden des Typus NOₓ kommen. Stickoxide tragen als Schadstoffe in der Atmosphäre zum sauren Regen bei.

Aufgabe der Erfindung ist es daher, eine Möglichkeit zu finden, die Luftzuführung in das Brennersystem dahingehend zu verbessern, dass die Luftzuführung in den Brenner über die gesamte Zeitdauer des Prozesses optimal einstellbar ist. Dies verbessert die Heizgasverbrennung und damit die Heizgasausbeute des Reformierprozesses. An den einzelnen Brennern sollen stets optimale Lambda-Werte eingestellt werden, so dass die Flammentemperatur stets die nur notwendige Höhe besitzt. Dadurch kann die Bildung der schädlichen Stickoxide deutlich verringert oder ganz abgestellt werden.

Die Erfindung löst die Aufgabe durch einen Reaktor zur katalytischen Primärreformierung von Kohlenwasserstoffen mit Wasserdampf unter erhöhtem Druck mit einer Vorrichtung zur Deckenbefeuerung eines Reformierprozessofens, wobei
- die Befeuerungseinrichtung einen wärmeisolierten Ofenraum mit in den Ofenraum gasdicht verschlossenen prozessführenden Reformierrohren aufheizt, die mit einem für Reformierprozesse geeigneten Katalysator zu beschicken sind und durch die ein Reformiergasgemisch durchgeleitet wird, und
- die Befeuerungseinrichtung aus einer Vielzahl von zwischen den Reformierrohren angeordneten Brennern besteht, und
- die Befeuerungseinrichtung gespeist wird mit Heizgas und Luft, und
- in jedem der Brenner für beide Gase getrennte Zuführungsvorrichtungen existieren, die jeweils fluchtend angeordnet und einzeln oder paarweise gemeinsam absperrbar sind, und
- die Mischung der beiden Gase jeweils im Brenner oder unmittelbar davor vorgenommen wird, und
wobei
- die Zuführungseinrichtung für Luft in jeden der Brenner einen Haupteinlasskanal und einen zusätzlichen Sekundäreinlasskanal aufweist, und
- beide Einlasskanäle mit Einrichtungen ausgestattet sind, die geeignet sind, den Gasdurchfluss einzustellen, und
- wobei jeder Sekundäreinlasskanal von dem jeweiligen Haupteinlasskanal nach der Einrichtung zur Einstellung des Gasdurchflusses abgezweigt wird, und der andere, weiterführende Kanal einen Primärluftkanal bildet, und
- das Verhältnis der Querschnittsflächen des Sekundäreinlasskanals zu dem des Haupteinlasskanals vor der Abzweigung des Sekundäreinlasskanals zwischen 1:2 und 1:100 beträgt.

Hierbei wird jeder Brenner individuell mit einem Heizgas-luft-Gemisch versorgt und für beide Gase existieren getrennte Zuführungseinrichtungen und der Hauptluftzuführungskanal ermöglicht eine zusätzliche Luftzuführung an der Brennerkonstruktion durch die feuerfeste Ofenauskleidung ("Sekundäreinlasskanal"). Die Mischung von Heizgas und Luft wird jeweils im Brenner vorgenommen.

In einer Ausgestaltung der Erfindung sind Sekundäreinlasskanäle und Haupteinlasskanäle mit einzeln oder paarweise gemeinsam absperrbaren Zuführungseinrichtungen ausgestattet.

In einer weiteren Ausgestaltung der Erfindung können die Sekundärdrosselklappen jeweils unmittelbar neben den zugehörigen Hauptdrosselklappen bedient werden. Dies ermöglicht es dem Bedienungspersonal, beide Zuführungen in einem Arbeitsschritt einzustellen.

Vorzugsweise werden alle zuführenden Kanäle nach unten in den Befeuerungsraum gerichtet und sind fluchtend angeordnet. Die Zuführungsrichtung der Lufteinlasskanäle kann je nach Konstruktionsart des Ofens geneigt oder über Absätze geführt sein, um die technische Durchführbarkeit der Befeuerung zu gewährleisten. Die Vorrichtungen zur Zuführung der Luft in den Brennerraum können über Schlitze durch die feuerfeste Ofenauskleidung gestaltet sein. Diese Konstruktion ermöglicht eine genauere Verteilung der Luft in den Flammenraum. Optional und je nach konstruktiver Gestaltung des Ofenraumes kann diese Schlitzform zur Optimierung der Verbrennung auch über Drallkörper oder Hosenrohre mit Verteilern ausgeführt werden.

In weiteren Ausgestaltungen der Erfindung werden alternativ
- die Sekundäreinlasskanäle von der Abzweigungsstelle aus senkrecht nach unten in den Feuerungsraum geführt, oder
- die Sekundäreinlasskanäle sind geneigt oder besitzen einen Absatz, oder
- die Sekundäreinlasskanäle im Brennereingangsbereich sind in Form eines Schlitzes oder eines Drallkörpers oder eines Hosenrohrs ausgeprägt.

Die Erfindung umfasst auch ein Verfahren zur katalytischen Primärreformierung von Kohlenwasserstoffen mit Wasserdampf unter erhöhtem Druck mit einer Vorrichtung zur Deckenbefeuerung eines Reformierprozessofens unter Verwendung der erfindungsgemäßen Vorrichtung. Hierbei ist vorgesehen, dass
- die Befeuerungseinrichtung einen wärmeisolierten Ofenraum mit in den Ofenraum gasdicht verschlossenen prozessführenden Reformierrohren aufheizt, die mit einem für Reformierprozesse geeigneten Katalysator zu beschicken sind und durch die ein Reformiergasgemisch durchgeleitet wird, und
- die Befeuerungseinrichtung aus einer Vielzahl von zwischen den Reformierrrohren angeordneten Brennern besteht, und
- die Befeuerungseinrichtung gespeist wird mit einem Heizgas und Luft, und
- in jedem der Brenner die Zuführung für beide Gase durch getrennte, fluchtend angeordnete und einzeln oder paarweise gemeinsam absperrbare Zuführungsvorrichtungen vorgenommen wird, und
- die Mischung der beiden Gase jeweils im Brenner oder unmittelbar davor vorgenommen wird, und
- die Zuführung für Luft in jeden der Brenner durch einen Haupteinlasskanal und einen zusätzlichen Sekundäreinlasskanal vorgenommen wird, die durch geeignete Einrichtungen im Gasdurchfluss eingestellt oder auch abgesperrt werden, und
- als Mischungsverhältnis von Luft zu Heizgas am Austritt des Primäreinlasskanals eine konstante Stöchiometrie mit einem Lambda-Wert von 1,05 bis 1,15 eingestellt wird, und je nach Luftzufuhr, in der Flamme ein Lambda-Wert von 1,1 bis 1,5 eingestellt wird. Der Austritt des Luft-Heizgas-Gemisches aus dem Primäreinlasskanal wird auch als Brennerstein bezeichnet.

Für die erfindungsgemäße Ausführung der Primärreformierprozesses wird zum Heizen bevorzugt ein Erdgas-Luft-Gemisch benutzt. In einer weiteren Ausführung des Prozesses wird der Brenner statt mit einem Erdgas-Luft-Gemisch mit einem LPG-Luft-Gemisch beheizt. Als LPG-Kohlenwasserstoffe bezeichnet man üblicherweise ein Gemisch von C₃- und C₄-Kohlenwasserstoffen, die aus der entsprechenden Erdölfraktion gewonnen werden und leicht zu verflüssigen sind. Geeignet als Heizgas sind statt Erdgas oder LPG auch andere Kohlenwasserstoffe, die vorzugsweise einen unterhalb der Raumtemperatur liegenden Siedepunkt besitzen.

Durch die beschriebene Art der Zuführung von Sekundärluft in die Flamme wird die Luftzuführung in den Brenner optimiert. Dadurch erreicht man je nach Steuerung ein optimales Verhältnis Luft zu Heizgas und eine optimale Steuerung der Flamme. Die maximale Flammentemperatur kann im Ofen durch diese Maßnahme relativ niedrig gehalten werden.

Gewöhnliche Konstruktionen zur Reformiersynthese stellen an den Brennern üblicherweise einen Lambda-Wert von ca. 1,1 ein. Dieser Wert kann jedoch betriebsbedingt schwanken. Bei erfindungsgemäßer Ausführung der Konstruktion kann der Sekundäreinlasskanal insbesondere bei höherer Luftmengenzufuhr geöffnet werden, so dass die zusätzliche Luft am Primärauslasskanal vorbeigeleitet wird. Dadurch kann der lokale Lambda-Wert am Brennerstein konstant bei 1,05 bis 1,15 gehalten werden, auch wenn sich in der Flamme ein Lambda-Wert von 1,1 bis 1,5 einstellt.

In einer Ausgestaltung des erfindungsgemäßen Verfahrens wird die Einstellung des Mischungsverhältnisses von Heizgas zu Luft am Austritt des Primäreinlasskanals durch Einstellung der im Einlassbereich angeordneten Drosselklappen in den Zuführungskanälen bewirkt.

In einer weiteren Ausgestaltung des erfindungsgemäßen Verfahrens enthält das Reformiergas Methan und erhitzten Wasserdampf. Das Reformiergas kann in der erfindungsgemäßen Vorrichtung durch wärmetauschende Einrichtungen im Abgasausführungstunnel ausserhalb des Ofenraumes mit dem Brennerabgas auf eine Temperatur von 500 bis 650 °C aufgeheizt werden.

In einer weiteren Ausgestaltung des erfindungsgemäßen Verfahrens wird die zum Heizen des Brenners benötigte Luft durch wärmetauschende Einrichtungen mit dem Brennerabgas auf eine Temperatur von 250 bis 450 °C aufgeheizt. Hierbei werden die Abgase im Abgasausführungstunnel hinter der wärmetauschenden Einrichtung zum Aufheizen des Reformiergases genutzt, so dass die Temperatur am Tunnelbeziehungsweise Kaminausgang in der Regel ca. 150-200 °C beträgt.

Die Abführung der Verbrennungsgase erfolgt über die obenerwähnten Rauchgastunnel aus Mauerwerk. Die Tunnel weisen an den Seiten Öffnungen auf, um einen Abzug der Rauchgase aus dem Ofenraum zu ermöglichen. Durch diese Maßnahme wird über den gesamten Ofenraum eine effiziente Abführung der Rauchgase gewährleistet. Die Tunnel werden üblicherweise aus Mauerwerkstoffen erstellt.

Die genannten Ausführungen haben den Vorteil einer optimierten Einstellung des Luft-Heizgas-Verhältnisses an den Brennern und einer optimalen Steuerung der Verbrennung im Hinblick auf Einstellung eines optimalen Lambda-Wertes. Es ist bekannt, dass sich der Stickoxidgehalt NOₓ eines Abgases bei Verwendung eines günstigeren Lambda-Wertes am Brennerstein deutlich erniedrigt. Auch ist bekannt, dass sich der Stickoxidgehalt NOₓ eines Abgases bei Einstellung einer niedrigeren Flammentemperatur deutlich erniedrigt. Dies kann einschlägig bekannten Nachschlagewerken entnommen werden. Beispielhaft sei hier die Lehre "The John Zink Combustion Handbook", C.E. Baukel Jr., CRC-Press, London New York, 2001, genannt. Stickoxide vom Typus NOₓ tragen zum sauren Regen bei.

Die erfindungsgemäße Ausgestaltung des Brenners und des Zuführungssystems für Heizgas und Luft wird anhand von zwei Skizzen, die einen Ausschnitt aus dem Reformierofen in Seitenansicht zeigen, genauer erläutert, wobei das erfindungsgemäße Verfahren nicht auf diese Ausführungsformen beschränkt ist.

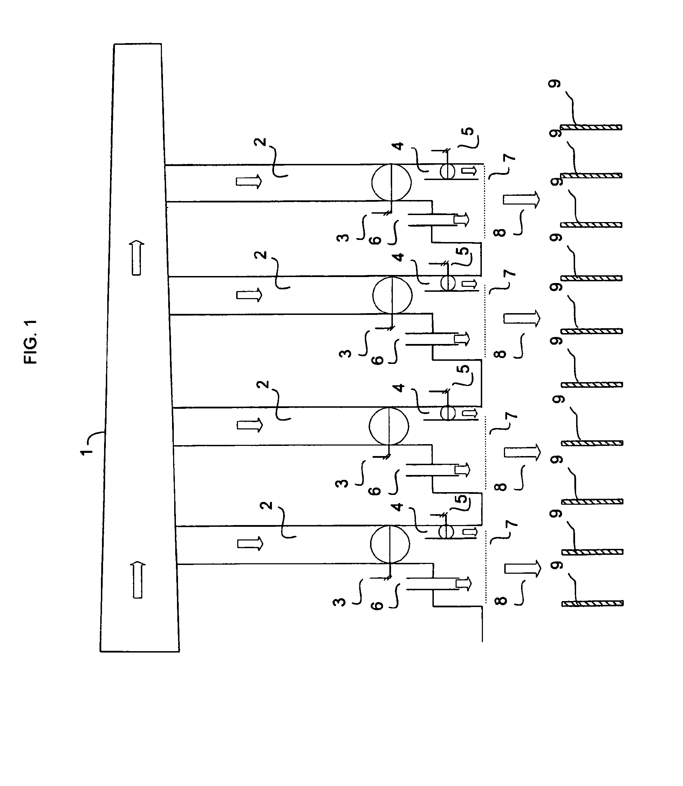

FIG. 1 zeigt das Schema der Luft- und Heizgaszuführung zum Brenner, beginnend vom Hauptluftzuführungskanal 1. Von diesem zweigen jeweils die einzelnen Zuführungskanäle für Luft 2 zu den einzelnen Brennern ab, von denen hier vier exemplarisch dargestellt sind. Die individuellen Hauptluftzuführungskanäle können durch einzeln absperrbare und voneinander unabhängige Regelungseinrichtungen 3 gesteuert werden. Von diesen zweigt dann vor der Brennerzuführung der erfindungsgemäße Sekundäreinlasskanal 4 für Luft ab, der ebenfalls eine einzeln absperrbare und unabhängige Regelungseinrichtung 5 besitzt. Der Hauptluftzufuhrkanal wird dann als Primäreinlasskanal der Luftzuführung weiter geführt. In diesen wird unmittelbar vor dem Brenner das Heizgas 6 eingespeist. Das Einspeisesystem tritt an der feuerfesten Ofenauskleidung 7 durch, um die Flammenführung 8 in den Ofenraum zu gewährleisten. Durch diese Befeuerung werden dann die für die Reformierreaktion vorgesehenen Reaktionsrohre 9 geheizt.

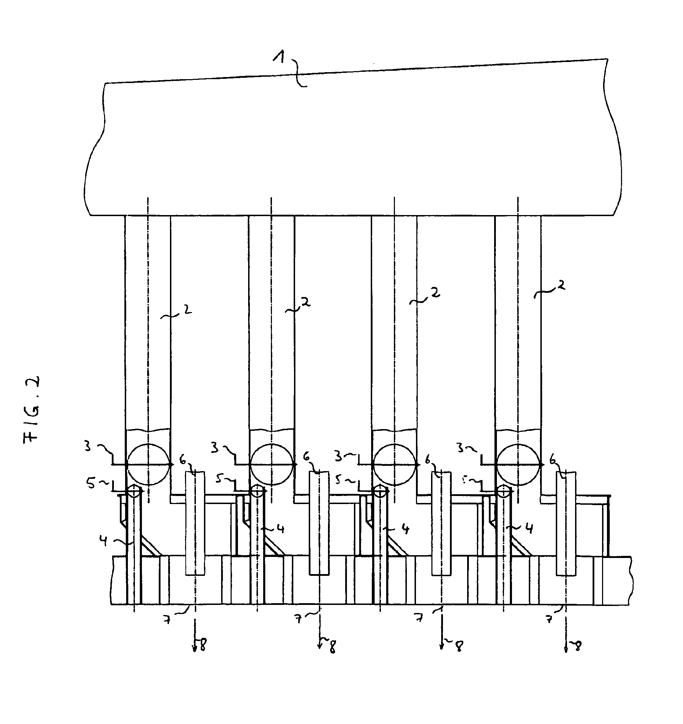

FIG. 2 zeigt das Zuführungssystem nochmals in verkleinerter Form. Gezeigt ist ebenfalls das Schema der Luft- und Heizgaszuführung am Brenner, beginnend vom Hauptluftzuführungskanal 1. Von diesem zweigen jeweils die einzelnen Zuführungskanäle für Luft 2 zu den einzelnen Brennern ab (der Übersichtlichkeit halber hier vierfach exemplarisch dargestellt). Die individuellen Hauptluftzuführungskanäle können durch einzeln absperrbare und voneinander unabhängige Regelungseinrichtungen 3 gesteuert werden. Von diesen zweigt dann vor der Brennerzuführung der erfindungsgemäße Sekundäreinlasskanal 4 für Luft ab, der ebenfalls eine einzeln absperrbare und unabhängige Regelungseinrichtung 5 besitzt. Der Hauptluftzufuhrkanal wird dann als Primäreinlasskanal der Luftzuführung weiter geführt. In diesen wird unmittelbar vor dem Brenner das Heizgas 6 über Regeleinrichtungen eingespeist. Das Einspeisesystem tritt an der feuerfesten Ofenauskleidung 7 durch, um die Flammenführung 8 in den Ofenraum zu gewährleisten.

### Bezugszeichenliste

1 Lufthauptzuführungskanal zum Brennersystem
2 Hauptluftzuführungskanal der einzelnen Brenner
3 Luftzuführungsregeleinrichtung des Haupteinlasskanals
4 Sekundäreinlasskanal
5 Luftzuführungsregeleinrichtung des Sekundäreinlasskanals
6 Heizgaszuführung
7 Durchtritt feuerfeste Ofenauskleidung ("Brennerstein")
8 Flammenführung
9 Reformiergasrohre

## Patentansprüche

1. Reaktor zur katalytischen Primärreformierung von Kohlenwasserstoffen mit Wasserdampf unter erhöhtem Druck mit einer Vorrichtung zur Deckenbefeuerung eines Reformierprozessofens, wobei
• die Befeuerungseinrichtung einen wärmeisolierten Ofenraum mit in den Ofenraum gasdicht verschlossenen prozessführenden Reformierrohren aufheizt, die mit einem für Reformierprozesse geeigneten Katalysator zu beschicken sind und durch die ein Reformiergasgemisch durchgeleitet wird, und
• die Befeuerungseinrichtung aus einer Vielzahl von zwischen den Reformierrohren angeordneten Brennern besteht, und
• die Befeuerungseinrichtung gespeist wird mit einem Heizgas und Luft, und
• in jedem der Brenner für beide Gase getrennte Zuführungsvorrichtungen existieren, die jeweils fluchtend angeordnet und einzeln oder paarweise gemeinsam absperrbar sind, und
• die Mischung der beiden Gase jeweils im Brenner oder unmittelbar davor vorgenommen wird,
**dadurch gekennzeichnet,**
• **dass** die Zuführungseinrichtung für Luft in jeden der Brenner einen Haupteinlasskanal und einen zusätzlichen Sekundäreinlasskanal aufweist, und
• beide Einlasskanäle mit Einrichtungen ausgestattet sind, die geeignet sind, den Gasdurchfluss einzustellen und auch abzusperren, und
• wobei jeder Sekundäreinlasskanal von dem jeweiligen Haupteinlasskanal nach der Einrichtung zur Einstellung des Gasdurchflusses abgezweigt wird, und der andere, weiterführende Kanal einen Primärtuftkanal bildet, und
• **dass** das Verhältnis der Querschnittsflächen des Sekundäreinlasskanals zu dem des Haupteinlasskanals vor der Abzweigung des Sekundäreinlasskanals zwischen 1:2 und 1:100 beträgt.

2. Vorrichtung nach Anspruch 1, **dadurch gekennzeichnet, dass** Sekundäreinlasskanäle und Haupteinlasskanäle mit einzeln absperrbaren Zuführungseinrichtungen ausgestattet sind.

3. Vorrichtung nach Anspruch 2, **dadurch gekennzeichnet, dass** die Sekundärdrosselklappen jeweils unmittelbar neben den zugehörigen Hauptdrosselklappen bedient werden können.

4. Vorrichtung nach einem der Ansprüche 1 bis 3, **dadurch gekennzeichnet, dass** die Sekundäreinlasskanäle von der Abzweigungsstelle aus nach unten in den Feuerungsraum geführt werden.

5. Vorrichtung nach einem der Ansprüche 1 bis 4, **dadurch gekennzeichnet, dass** die Sekundäreinlasskanäle geneigt sind oder einen Absatz besitzen.

6. Vorrichtung nach einem der Ansprüche 1 bis 5, **dadurch gekennzeichnet, dass** die die Sekundäreinlasskanäle im Brennereingangsbereich in Form eines Schlitzes oder eines Drallkörpers oder eines Hosenrohrs ausgeprägt sind.

7. Verfahren zur katalytischen Primärreformierung von Kohlenwasserstoffen mit Wasserdampf unter erhöhtem Druck mit einer Vorrichtung zur Deckenbefeuerung eines Reformierprozessofens nach Anspruch 1, wobei
• die Befeuerungseinrichtung einen wärmeisolierten Ofenraum mit in den Ofenraum gasdicht verschlossenen prozessführenden Reformierrohren aufheizt, die mit einem für Reformierprozesse geeigneten Katalysator zu beschicken sind und durch die ein Reformiergasgemisch durchgeleitet wird, und
• die Befeuerungseinrichtung gespeist wird mit einem Heizgas und Luft, und
• in jedem der Brenner die Zuführung für beide Gase durch getrennte, fluchtend angeordnete und einzeln oder paarweise gemeinsam absperrbare Zuführungsvorrichtungen vorgenommen wird, und
• die Mischung der beiden Gase jeweils im Brenner oder unmittelbar davor vorgenommen wird, und
• die Zuführung für Luft in jeden der Brenner durch einen Haupteinlasskanal und einen zusätzlichen Sekundäreinlasskanal vorgenommen wird, die durch geeignete Einrichtungen im Gasdurchfluss eingestellt oder auch abgesperrt werden,
• **dadurch gekennzeichnet, dass**
• das als Mischungsverhältnis von Luft zu Heizgas am Austritt des Primäreinlasskanals eine konstante Stöchiometrie mit einem Lambda-Wert von 1,05 bis 1,15 eingestellt wird, und je nach Luftzufuhr, in der Flamme ein Lambda-Wert von 1,1 bis 1,5 eingestellt wird.

8. Verfahren nach Anspruch 7, **dadurch gekennzeichnet, dass** die Einstellung des Mischungsverhältnisses von Heizgas zu Luft am Austritt des Primäreinlasskanals durch Einstellung der im Einlassbereich angeordneten Drosselklappen in den Zuführungskanälen bewirkt wird.

9. Verfahren nach Anspruch 7 oder 8, **dadurch gekennzeichnet, dass** das Reformiergas Methan und erhitzten Wasserdampf enthält.

10. Verfahren nach einem der Ansprüche 7 bis 9, **dadurch gekennzeichnet, dass** die zu reformierende Reaktionsgas durch wärmetauschende Vorrichtungen mit dem Brennerabgas auf eine Temperatur von 500 bis 650 °C aufgeheizt wird.

11. Verfahren nach einem der Ansprüche 7 bis 10, **dadurch gekennzeichnet, dass** die zum Heizen des Brenners benötigte Luft durch wärmetauschende Vorrichtungen mit dem Brennerabgas auf eine Temperatur von 250 bis 450 °C aufgeheizt wird.

## Claims

1. Reactor for catalytic primary reforming of hydrocarbons with steam at elevated pressure with a device for top-firing of a reforming process furnace, wherein
• the firing device heats a thermally insulated furnace space with gasproof sealed reformer tubes in which the process takes place and which are arranged in the furnace space, said reformer tubes having to be fed with a catalyst suitable for reforming processes and through which a reforming gas mixture is passed, and
• the firing device consists of a multitude of burners arranged between these reformer tubes, and
• the firing device is supplied with fuel gas and air, and
• separate feeder devices exist in each burner for both gases, said feeder devices being arranged in flush alignment and being lockable individually or jointly in pairs, and
• the blending of both gases is accomplished each in the burner or immediately upstream to it,
**characterised in that**
• the feeder device for air into each burner comprises a main inlet channel and an additional secondary inlet channel, and
• both inlet channels are equipped with facilities that are suitable to adjust and also to shut off the gas flow, and
• wherein each secondary inlet channel is branched off from the respective main inlet channel downstream of the facility for adjustment of the gas flow, and the other further extending channel forms a primary air channel, and
• the ratio of cross-sectional areas of the secondary inlet channel to the main inlet channel upstream to the branch-off of the secondary inlet channel ranges between 1:2 and 1:100.

2. Device according to claim 1, **characterised in that** the secondary inlet channels and main inlet channels are equipped with individually lockable feeder devices.

3. Device according to claim 2, **characterised in that** the secondary butterfly flaps can be operated each immediately next to the associated main butterfly flaps

4. Device according to one of claims 1 to 3, **characterised in that** the secondary inlet channels are guided from the branch-off point downwards into the firing chamber.

5. Device according to one of claims 1 to 4, **characterised in that** the secondary inlet channels are inclined or have an offset step.

6. Device according to one of claims 1 to 5, **characterised in that** the secondary inlet channels in the burner entrance area are configured in form of a slot or a twisting element or a bifurcated tube.

7. Method for catalytic primary reforming of hydrocarbons with steam at elevated pressure with a device for top-firing of a reforming process furnace according to claim 1, wherein
• the firing device heats a thermally insulated furnace space with gasproof sealed reformer tubes in which the process takes place and which are arranged in the furnace space, said reformer tubes having to be fed with a catalyst suitable for reforming processes and through which a reforming gas mixture is passed, and
• the firing device is supplied with fuel gas and air, and
• in each burner both gases are fed by separate feeder devices arranged in flush alignment and lockable individually or jointly in pairs, and
• the blending of both gases is accomplished each in the burner or immediately upstream to it, and
• the air is fed into each burner by a main inlet channel and an additional secondary inlet channel, both inlet channels being adjusted and set or even shut off by suitable facilities in the gas flow,
• **characterised in that**
• a constant stoichiometry (Lambda value) of 1.05 to 1.15 is adjusted and set as mixing ratio of air and fuel gas at the outlet of the primary inlet channel and depending on the air supply a Lambda value of 1.1 to 1.5 is adjusted in the flame.

8. Method according to claim 7, **characterised in that** the adjustment and setting of the mixing ratio of fuel gas and air at the outlet of the primary inlet channel is accomplished by adjusting and setting the butterfly flaps mounted in the feeder channels and arranged in the entrance area.

9. Method according to claim 7 or 8, **characterised in that** the reforming gas contains methane and heated-up steam.

10. Method according to one of claims 7 to 9, **characterised in that** the reaction gas to be reformed is heated up with the burner waste gas by heat-exchanging devices to a temperature of 500 to 650°C.

11. Method according to one of claims 7 to 10, **characterised in that** the air required for heating the burner is heated up with the burner waste gas by heat-exchanging devices to a temperature of 250 to 450 °C.

## Revendications

1. Réacteur de reformage catalytique primaire d'hydrocarbures avec de la vapeur d'eau sous pression plus importante et un dispositif pour une combustion en voûte d'un four process de reformage,
• le dispositif de combustion chauffant une chambre de combustion calorifugée avec les tubes de reformage fermés de manière étanche au gaz, implantés dans la chambre de combustion pour conduire au process, qui doivent être alimentés avec un catalyseur approprié aux gaz de reformage et dans lesquels est dirigé un mélange gazeux de reformage, et
• le dispositif de combustion étant composé d'une multitude de brûleurs implantés entre les tubes de reformage, et
• le dispositif de combustion étant alimenté avec un gaz de chauffage et de l'air, et
• des dispositifs d'alimentation dédiés à chaque gaz étant présents dans chaque brûleur, implantés en ligne et sectionnables individuellement ou communément par groupes de deux, et
• le mélange des deux gaz étant réalisé respectivement dans le brûleur ou directement avant,
**caractérisé**
• **en ce que** le dispositif d'alimentation de l'air dans chaque brûleur présente un conduit d'admission principal ainsi qu'un conduit d'admission secondaire supplémentaire, et
• **en ce que** les deux conduits d'admission sont équipés de dispositifs appropriés au réglage et à la coupure du débit de gaz,
• le conduit d'admission secondaire étant dérivé du conduit d'admission principal respectif en aval du dispositif de réglage du débit de gaz, l'autre conduit de continuation formant un conduit d'air primaire, et
• **en ce que** le rapport des surfaces de la section transversale du conduit d'admission secondaire et du conduit d'admission principal avant la dérivation du conduit d'admission secondaire est de 1:2 ou 1:100.

2. Dispositif selon la revendication 1, **caractérisé en ce que** les conduits d'admission secondaires et principaux sont équipés de dispositifs d'alimentation sectionnables individuellement.

3. Dispositif selon la revendication 2, **caractérisé en ce que** les vannes papillons secondaires peuvent être actionnées directement à côté des vannes papillons principales correspondantes.

4. Dispositif selon une des revendications 1 à 3, **caractérisé en ce que** les conduits d'admission secondaires sont guidés vers le bas depuis le point de dérivation jusque dans la chambre de combustion.

5. Dispositif selon une des revendications 1 à 4, **caractérisé en ce que** les conduits d'admission secondaires sont inclinés ou perpendiculaires.

6. Dispositif selon une des revendications 1 à 5, **caractérisé en ce que** les conduits d'admission secondaires dans la zone d'admission du brûleur sont en forme de fente ou d'hélice ou de tube en Y.

7. Procédé de reformage catalytique primaire d'hydrocarbures avec de la vapeur d'eau sous pression plus importante et un dispositif pour une combustion en voûte d'un four process de reformage selon la revendication 1,
• le dispositif de combustion chauffant une chambre de combustion calorifugée avec les tubes de reformage fermés de manière étanche au gaz, implantés dans la chambre de combustion pour conduire au process, qui doivent être alimentés avec un catalyseur approprié aux gaz de reformage et dans lesquels est dirigé un mélange gazeux de reformage, et
• le dispositif die combustion étant alimenté avec un gaz de chauffage et de l'air, et
• l'alimentation des deux gaz dans chaque brûleur étant réalisée avec des dispositifs d'alimentation séparés, implantés en ligne et sectionnables individuellement ou communément par groupes de deux, et
• le mélange des deux gaz étant réalisé respectivement dans le brûleur ou directement avant, et
• l'alimentation de l'air dans chaque brûleur étant réalisée par un conduit d'admission principal ainsi qu'un conduit d'admission secondaire supplémentaire, tous deux réglables voire sectionnables via des dispositifs appropriés pour le débit de gaz,
• **caractérisé en ce que**
• en guise de rapport du mélange air - gaz de chauffe est réglée à la sortie du conduit d'admission primaire une stoechiométrie constante présentant une valeur lambda comprise entre 1,05 et 1,15 et que selon l'alimentation en air, est réglée dans la flamme une valeur lambda comprise entre 1,1 et 1,5.

8. Procédé selon la revendication 7, **caractérisé en ce que** le réglage du rapport du mélange gaz de chauffe - air à la sortie du conduit d'admission principal est réalisé par le réglage des vannes papillons implantées dans la zone d'admission des conduits d'alimentation secondaires.

9. Procédé selon la revendication 7 ou 8, **caractérisé en ce que** le gaz de reformage comprend du méthane et de la vapeur d'eau chauffée.

10. Procédé selon une des revendications 7 à 9, **caractérisé en ce que** le gaz de réaction à reformer est chauffé via des dispositifs d'échange thermique avec le gaz d'échappement du brûleur à une température comprise entre 500 bis 650 °C.

11. Procédé selon une des revendications 7 à 10, **caractérisé en ce que** l'air nécessaire au chauffage du brûleur est chauffé via des dispositifs d'échange thermique avec le gaz d'échappement du brûleur à une température comprise entre 250 bis 450 °C.
